# EUROPEAN PATENT APPLICATION

(11) **EP 4 106 173 A1**
(43) Date of publication of application: **21.12.2022**
(21) Application number: 21925236.8
(22) Date of filing: 10.02.2021
(51) Int. Cl.: H02M 3/335

(54) **DIRECT-CURRENT CONVERTER, ELECTRONIC DEVICE AND CHARGER**

(71) Applicant: Huawei Digital Power Technologies Co., Ltd., Futian District, Shenzhen, Guangdong 518043 (CN)
(72) Inventor: WU, Liang, Shenzhen, Guangdong 518129 (CN); DAI, Shengyong, Shenzhen, Guangdong 518129 (CN)
(74) Representative: MERH-IP Matias Erny Reichl Hoffmann Patentanwälte PartG mbB
(86) International application number: PCT/CN2021/076561
(87) International publication number: WO 2022/170574

(57) **Abstract**

This application discloses a direct current to direct current converter, an electronic device, and a charger, to strike a balance between efficiency and a voltage conversion range. The direct current to direct current converter includes a switch circuit, an auxiliary circuit, a transformer, and a first half-wave rectifier circuit. The transformer includes a primary-side winding and a secondary-side winding. A first port of the auxiliary circuit is connected to a high potential point of the switch circuit, a second port of the auxiliary circuit is connected to a low potential point of the switch circuit, and a third port of the auxiliary circuit is connected to a first terminal of the primary-side winding. A second terminal of the primary-side winding is connected to an intermediate node of the switch circuit. The secondary-side winding is connected to the first half-wave rectifier circuit. The transformer is configured to: when the switch circuit is in a first state, store first electric energy transmitted by the auxiliary circuit; and when the switch circuit is in a second state, receive second electric energy transmitted by the auxiliary circuit, and output the received second electric energy and the stored first electric energy to the first half-wave rectifier circuit.

## Description

### TECHNICAL FIELD

This application relates to the field of power electronics, and in particular, to a direct current to direct current converter, an electronic device, and a charger.

### BACKGROUND

In recent years, an electronic device such as a consumer electronics product is greatly developed and popularized, and a hardware specification and performance of the electronic device are gradually improved. Therefore, optimization of power consumption of the electronic device becomes one of priorities in the field of electronic device research.

Specifically, a terminal battery is usually configured in the electronic device. When power of the terminal battery is low, an external power supply needs to be used to charge the terminal battery. To implement safe charging, a direct current to direct current (direct current to direct current, DC/DC) converter needs to be configured between the external power supply and the terminal battery. The DC/DC converter may convert a direct current voltage output by the external power supply into a charging voltage of the terminal battery.

In actual use, in a process of charging the terminal battery, a voltage of the terminal battery gradually increases, and therefore an output voltage value of the DC/DC converter needs to be adjusted in real time based on the voltage of the terminal battery. Therefore, the DC/DC converter needs to have a relatively wide voltage conversion range.

A dual-switch flyback converter is a common DC/DC converter, and has advantages such as a wide voltage conversion range and a simple structure, and therefore is widely applied to a scenario of charging an electronic device.

A primary-side circuit of the dual-switch flyback converter includes a switching transistor Q1, an auxiliary circuit, and a transformer. A first terminal of the switching transistor Q1 is connected to a first terminal of a primary-side winding of the transformer and the auxiliary circuit, and a second terminal of Q1 is connected to a negative electrode of a power supply. A second terminal of the primary-side winding of the transformer is connected to a positive electrode of the power supply by using the auxiliary circuit. During working of the dual-switch flyback converter, when Q1 is closed, the transformer stores electric energy output by the power supply, and when Q1 is open, the transformer releases the electric energy that is stored when Q1 is closed to a terminal battery that is connected to a back end of the transformer. For a case in which a voltage changes in a process of charging the terminal battery, energy storage duration of the transformer may be adjusted by controlling duration of closing Q1, to adjust a voltage conversion range of the dual-switch flyback converter.

However, in the current dual-switch flyback converter, when Q1 is open, a reflected voltage generated by the primary-side winding and a voltage output by the external power supply are directly applied to both terminals of the switching transistor that is open. To prevent the switching transistor from being damaged, a switching transistor with a relatively high withstand voltage needs to be used. However, for a switching transistor with a higher withstand voltage, there is higher impedance when the switching transistor is in a closed state, and a greater loss is generated when the switching transistor works in the closed state. Consequently, efficiency of the direct current to direct current converter is directly affected.

### SUMMARY

This application provides a direct current to direct current converter, an electronic device, and a charger, to strike a balance between efficiency and a voltage conversion range.

According to a first aspect, this application provides a direct current to direct current converter. The direct current to direct current converter may include a switch circuit, an auxiliary circuit, a transformer, and a first half-wave rectifier circuit. The transformer includes a primary-side winding and a secondary-side winding. The switch circuit may include a first switching device and a second switching device that are connected in series, and the switch circuit is configured to receive a first direct current.

A first port of the auxiliary circuit is connected to a high potential point of the switch circuit, a second port of the auxiliary circuit is connected to a low potential point of the switch circuit, and a third port of the auxiliary circuit is connected to a first terminal of the primary-side winding. A second terminal of the primary-side winding is connected to an intermediate node of the switch circuit. The secondary-side winding is connected to the first half-wave rectifier circuit.

The transformer is configured to: when the switch circuit is in a first state, store first electric energy transmitted by the auxiliary circuit; and when the switch circuit is in a second state, receive second electric energy transmitted by the auxiliary circuit, and output the received second electric energy and the stored first electric energy to the first half-wave rectifier circuit.

Based on the foregoing structure of the direct current to direct current converter, electric energy transmitted by the transformer to the first half-wave rectifier circuit includes two parts: the stored first electric energy and the received second electric energy. A longer time of storing the first electric energy indicates higher power of the first electric energy stored in the transformer and a larger voltage value output by the first half-wave rectifier circuit. Therefore, a percentage of the time of storing the first electric energy in a voltage conversion period may be adjusted, to change a voltage conversion range of the direct current to direct current converter. In addition, when the first switching device is closed, a reverse voltage borne by the second switching device is a sum of a closing voltage of the first switching device and a voltage value of the first direct current. The closing voltage of the first switching device is approximately equal to 0, and therefore a value of the reverse voltage borne by the second switching device is effectively reduced. Therefore, a switching device with a relatively low withstand voltage may be selected, to improve efficiency of the direct current to direct current converter.

In a possible design, the first state includes: the first switching device is open and the second switching device is closed; and the second state includes: the first switching device is closed and the second switching device is open.

In a possible design, the transformer includes a first inductor and a second inductor. The first inductor may be an excitation inductor of the transformer, and the second inductor is a leakage inductor of the transformer.

The first inductor is connected in parallel to the primary-side winding. A first terminal of the second inductor is connected to the third port of the auxiliary circuit, and a second terminal of the second inductor is connected to the first terminal of the primary-side winding.

Specifically, the first inductor is configured to: when the switch circuit is in the first state, store the first electric energy transmitted by the auxiliary circuit; and when the switch circuit is in the second state, transmit the stored first electric energy to the secondary-side winding. The primary-side winding is configured to: when the switch circuit is in the second state, receive the second electric energy by the primary-side winding, and transmit the second electric energy to the secondary-side winding.

In a possible design, the auxiliary circuit includes a first capacitor and a second capacitor.

A first terminal of the first capacitor is connected to the high potential point of the switch circuit, and a second terminal of the first capacitor is separately connected to a first terminal of the second capacitor and the first terminal of the primary-side winding. A second terminal of the second capacitor is connected to the low potential point of the switch circuit.

Based on the foregoing structure of the direct current to direct current converter, when the switch circuit is in the first state or the second state, an electric energy transmission path for the primary-side winding of the transformer may be formed by using the first capacitor, the second capacitor, and the switching device of the switch circuit, to transmit electric energy received by the direct current to direct current converter to the transformer.

In a possible design, when a leakage inductor in the primary-side winding does not meet a requirement of the direct current to direct current converter for an inductor, the auxiliary circuit further includes a third inductor connected between the second terminal of the first capacitor and the first terminal of the primary-side winding.

In a possible design, the auxiliary circuit includes a plurality of third capacitors and a plurality of fourth capacitors.

The plurality of third capacitors are sequentially connected in series to form a first branch circuit, and the plurality of fourth capacitors are sequentially connected in series to form a second branch circuit. A first terminal of the first branch circuit is connected to the high potential point of the switch circuit, and a second terminal of the first branch circuit is separately connected to a first terminal of the second branch circuit and the first terminal of the primary-side winding. A second terminal of the second branch circuit is connected to the low potential point of the switch circuit.

In a possible design, the auxiliary circuit includes a plurality of fifth capacitors and a plurality of sixth capacitors.

The plurality of fifth capacitors are connected in parallel to form a third branch circuit, and the plurality of sixth capacitors are connected in parallel to form a fourth branch circuit. A first terminal of the third branch circuit is connected to the high potential point of the switch circuit, and a second terminal of the third branch circuit is separately connected to a first terminal of the fourth branch circuit and the first terminal of the primary-side winding. A second terminal of the fourth branch circuit is connected to the low potential point of the switch circuit.

In a possible design, the direct current to direct current converter further includes at least one second half-wave rectifier circuit.

An input terminal of each of the at least one second half-wave rectifier circuit is connected to the secondary-side winding, and an output terminal of each second half-wave rectifier circuit is connected in parallel to an output terminal of the first half-wave rectifier circuit.

Based on the foregoing structure of the direct current to direct current converter, when power of the electric energy transmitted by the transformer is excessively high, to avoid a case in which a loss is caused to the first half-wave rectifier circuit because the first half-wave rectifier circuit bears a high current, shunting may be performed for the first half-wave rectifier circuit by using the second half-wave rectifier circuit, to effectively protect safety of the direct current to direct current converter.

In a possible design, the primary-side winding includes a first input winding.

A first terminal of the first input winding is connected to a first terminal of the first inductor, and a second terminal of the first input winding is connected to the intermediate node of the switch circuit and a second terminal of the first inductor.

In a possible design, the primary-side winding further includes a second input winding that is connected between the second terminal of the first input winding and the intermediate node of the switch circuit.

Based on the foregoing structure of the direct current to direct current converter, when the power of the electric energy transmitted by the transformer is relatively high, to avoid a case in which a single input winding cannot perform transmission, the second input winding may be disposed. In this case, each of the first input winding and the second input winding transmits a part of the electric energy, to ensure normal working of the transformer.

In a possible design, the first half-wave rectifier circuit includes a third switching device and a seventh capacitor.

A first terminal of the third switching device is connected to a first terminal of the secondary-side winding, and a second terminal of the third switching device is connected to a first terminal of the seventh capacitor. A second terminal of the seventh capacitor is connected to a second terminal of the secondary-side winding.

In a possible design, the direct current to direct current converter further includes a controller.

The controller is connected to the switch circuit, and the controller is configured to control the switch circuit to be in the first state or the second state.

Based on the foregoing structure of the direct current to direct current converter, under control of the controller, a status of the switch circuit may be adjusted to control an energy storage time of the transformer, to adjust an output voltage of the direct current to direct current converter.

In a possible design, the controller is further configured to adjust, based on a target turn ratio of the direct current to direct current converter, duration of maintaining the first state and the second state. The target turn ratio is a ratio of the voltage value of the first direct current to a voltage value of a second direct current.

Based on the foregoing structure of the direct current to direct current converter, duration of the first state may be adjusted, to meet a requirement of an electric device for a charging voltage in a charging process.

According to a second aspect, an embodiment of this application provides an electronic device. The electronic device may include an electric device and the direct current to direct current converter provided in the first aspect of embodiments of this application.

The direct current to direct current converter is configured to: receive a first direct current, and convert the first direct current into a second direct current. A voltage value of the second direct current is an operating voltage value of the electric device. The electric device is connected to the direct current to direct current converter, and the electric device is configured to receive the second direct current.

According to the electronic device, the direct current to direct current converter may be used to supply power to the electric device. In addition, when a supply voltage of the electric device changes, the direct current to direct current converter may be used to adjust a voltage output to the electric device, to meet a power supply requirement of the electric device.

According to a third aspect, an embodiment of this application provides a charger. The charger may include an alternating current to direct current conversion circuit (AC/DC conversion circuit) and the direct current to direct current converter provided in the first aspect of embodiments of this application.

The AC/DC conversion circuit is configured to: receive a first alternating current, and convert the first alternating current into a first direct current. The direct current to direct current converter is connected to the AC/DC converter, and the direct current to direct current converter is configured to: receive the first direct current, and convert the first direct current into a second direct current.

### BRIEF DESCRIPTION OF DRAWINGS

FIG. 1 is a schematic diagram of a power supply architecture of an electronic device;
FIG. 2 is a schematic diagram of a structure of a flyback conversion circuit;
FIG. 3 is a schematic diagram of a structure of a direct current to direct current converter;
FIG. 4 is a schematic diagram of a structure of a switch circuit;
FIG. 5 is a schematic diagram 1 of a structure of an auxiliary circuit;
FIG. 6 is a schematic diagram 2 of a structure of an auxiliary circuit;
FIG. 7 is a schematic diagram 1 of a structure of a transformer;
FIG. 8 is a schematic diagram 2 of a structure of a transformer;
FIG. 9 is a schematic diagram 3 of a structure of a transformer;
FIG. 10 is a schematic diagram 4 of a structure of a transformer;
FIG. 11 is a schematic diagram 5 of a structure of a transformer;
FIG. 12 is a schematic diagram of a structure of a first half-wave rectifier circuit;
FIG. 13 is a schematic diagram of a structure of a second half-wave rectifier circuit;
FIG. 14 is a schematic diagram of a drive signal and a voltage change of an auxiliary circuit;
FIG. 15 is an equivalent schematic diagram 1 of a direct current to direct current converter;
FIG. 16 is an equivalent schematic diagram 2 of a direct current to direct current converter;
FIG. 17 is an equivalent schematic diagram 3 of a direct current to direct current converter;
FIG. 18 is an equivalent schematic diagram 4 of a direct current to direct current converter;
FIG. 19 is a schematic diagram of a structure of an electronic device; and
FIG. 20 is a schematic diagram of a structure of a charger.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. It should be noted that in the description of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects. In addition, it should be understood that in the descriptions of this application, words such as "first" and "second" are merely used for distinguished descriptions, and cannot be understood as an indication or implication of relative importance, and cannot be understood as an indication or implication of a sequence.

It should be noted that the "connection" in embodiments of this application refers to an electric connection, and the connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

It should be noted that a "voltage conversion range" in embodiments of this application is a value range between a maximum turn ratio and a minimum turn ratio of a conversion circuit. The "turn ratio" is a ratio of an output voltage to an input voltage of the conversion circuit. If the conversion circuit performs buck conversion, the output voltage of the conversion circuit is less than the input voltage of the conversion circuit, and the turn ratio of the conversion circuit is a value that is less than 1 and greater than 0. If the conversion circuit performs boost conversion, the output voltage of the conversion circuit is greater than the input voltage of the conversion circuit, and the turn ratio of the conversion circuit is a value that is greater than 1.

It should be noted that a switching device in embodiments of this application may be one or more of a plurality of types of switching transistors such as a relay, a metal oxide semiconductor field effect transistor (metal oxide semiconductor field effect transistor, MOSFET), a bipolar junction transistor (bipolar junction transistor, BJT), and an insulated gate bipolar transistor (insulated gate bipolar transistor, IGBT). The plurality of types of switching transistors are not listed one by one in embodiments of this application. Each switching device may include a first electrode, a second electrode, and a control electrode. The control electrode is configured to control the switching device to be closed or open. When the switching device is closed, a current may be transmitted between the first electrode and the second electrode of the switching device. When the switching device is open, no current can be transmitted between the first electrode and the second electrode of the switching device. A MOSFET is used as an example. The control electrode of the switching device is a gate, and the first electrode of the switching device may be a source of the switching device, and the second electrode may be a drain of the switching device; or the first electrode may be a drain of the switching device, and the second electrode may be a source of the switching device.

As a hardware specification and performance of an electronic device are gradually improved, the electronic device faces relatively severe problems of power consumption and integration. The power consumption of the electronic device may be understood as electric energy consumed by the electronic device in a unit time, and includes both valid electric energy that supplies power to the electronic device and invalid electric energy that is consumed in the electronic device. The invalid electric energy may also be referred to as a loss such as a heat loss or a transmission loss. The integration of the electronic device may be understood as a quantity of components that can be disposed in unit space of the electronic device.

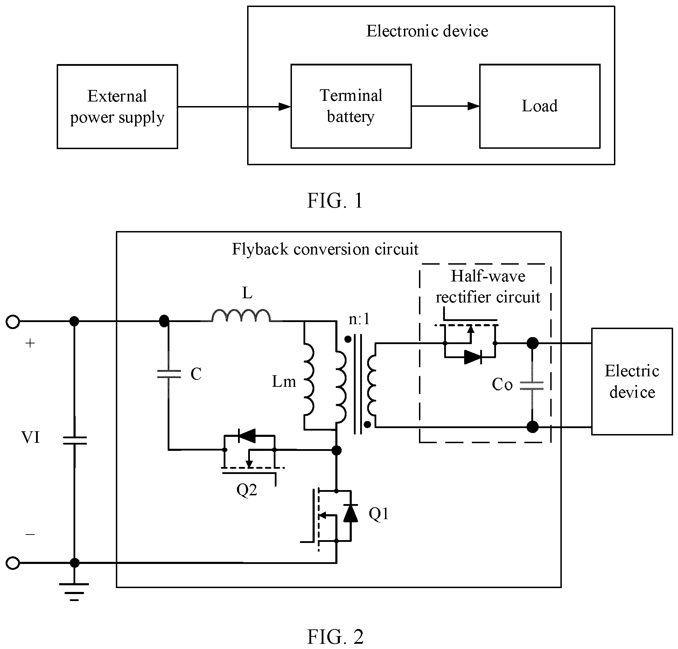

FIG. 1 is an example schematic diagram of a structure of an electronic device. As shown in FIG. 1, the electronic device mainly includes a terminal battery and a load. For example, the electronic device may be a smartphone, a tablet computer, or a smart watch, and may support a cutting-edge technology such as 5G and a foldable screen.

The terminal battery is usually a storage battery, and has at least two working states: a charging state and a discharging state. When in the charging state, the terminal battery may receive electric energy input by an external power supply. When the terminal battery is in the discharging state, the terminal battery supplies power to the load in the electronic device. Usually, when the terminal battery is in the charging state, no power is discharged or discharging power is less than charging power, so that a battery voltage of the terminal battery gradually increases.

When the terminal battery 12 is in the charging state, the terminal battery may be connected to the external power supply by using a conversion circuit. The conversion circuit may convert, into a charging voltage of the terminal battery, a voltage output by the external power supply, to meet a charging requirement of the terminal battery.

In a process of charging the terminal battery, the voltage of the terminal battery gradually increases. An example in which the electronic device is a smartphone is used. When the terminal battery is in the charging state, the voltage of the terminal battery may change within a range from 3 V to 4.4 V. The charging voltage required by the terminal battery varies with the battery voltage of the terminal battery. To meet a requirement of the terminal battery for the charging voltage in the charging state, the conversion circuit needs to adjust a charging voltage value based on the voltage of the terminal battery. Therefore, a specific voltage regulation range of the conversion circuit is needed to meet the requirement of the terminal battery for the charging voltage in the charging state.

A flyback conversion circuit has advantages such as a wide voltage conversion range and a simple structure, and therefore is widely applied to a scenario of charging a terminal battery. FIG. 2 is a schematic diagram of a possible structure of a flyback conversion circuit that includes two switching transistors. As shown in FIG. 2, the flyback conversion circuit mainly includes a switching device Q1, a switching device Q2, an inductor L, a capacitor C, a transformer, and a rectifier circuit.

One terminal of the inductor L is connected to a positive terminal of an external power supply VI and one terminal of the capacitor C, and the other terminal of L is connected to a first terminal of a primary-side winding of the transformer and a first terminal of an excitation inductor Lm of the transformer. A second terminal of the primary-side winding of the transformer is connected to a first electrode of Q1 and a second electrode of Q2, and a second terminal of the excitation inductor Lm is connected to the second terminal of the primary-side winding. A second electrode of Q1 is connected to a negative terminal of the external power supply V1, and a first electrode of Q2 is connected to the other terminal of C. A secondary-side winding of the transformer is connected to a half-wave rectifier circuit. The half-wave rectifier circuit is connected to an electric device, and supplies power to the electric device. The inductor L may be an independent inductor or a leakage inductor of the transformer.

It may be learned that when the switching device Q1 is closed and the switching device Q2 is open, electric energy output by the external power supply is transmitted to the excitation inductor Lm of the transformer by using a closed path that includes the inductor L, the excitation inductor Lm, and Q1, and the excitation inductor Lm stores the electric energy output by the external power supply. When the switching device Q2 is closed and the switching device Q1 is open, the electric energy stored in the excitation inductor Lm is released by using a closed path that includes the inductor L, the capacitor C, and the switching device Q2, and the stored electric energy is transmitted to the secondary-side winding of the transformer. Electric energy received by the secondary-side winding is rectified by using the half-wave rectifier circuit, and then output to the electric device that is connected to a back end. When the flyback conversion circuit is used to adjust an output to provide a voltage for the electric device, a longer energy storage time of the excitation inductor Lm indicates a larger amount of electric energy stored in the excitation inductor Lm and a higher voltage generated when the excitation inductor Lm releases the electric energy. Therefore, the energy storage time of the excitation inductor Lm may be adjusted, to adjust a voltage conversion range of the flyback conversion circuit.

In specific implementation, when the switching device Q1 is closed, a voltage borne by both terminals of the switching device Q1 includes both an output voltage of the external power supply VI and a reflected voltage generated when the primary-side excitation inductor Lm releases the stored electric energy. To avoid a case in which the switching device is damaged because the switching device bears an excessively high reverse voltage, the switching device needs to have a relatively high withstand voltage. However, for a switching device with a higher withstand voltage, there is higher impedance when the switching device is in a closed state, and a greater loss is generated when the switching device works in the closed state. Consequently, efficiency of the conversion circuit is directly affected.

In view of this, this application provides a direct current to direct current converter. The direct current to direct current converter may be applied to a switch-mode power supply, to meet a voltage requirement of a device that is connected to a back end of the switch-mode power supply and to improve efficiency of the converter.

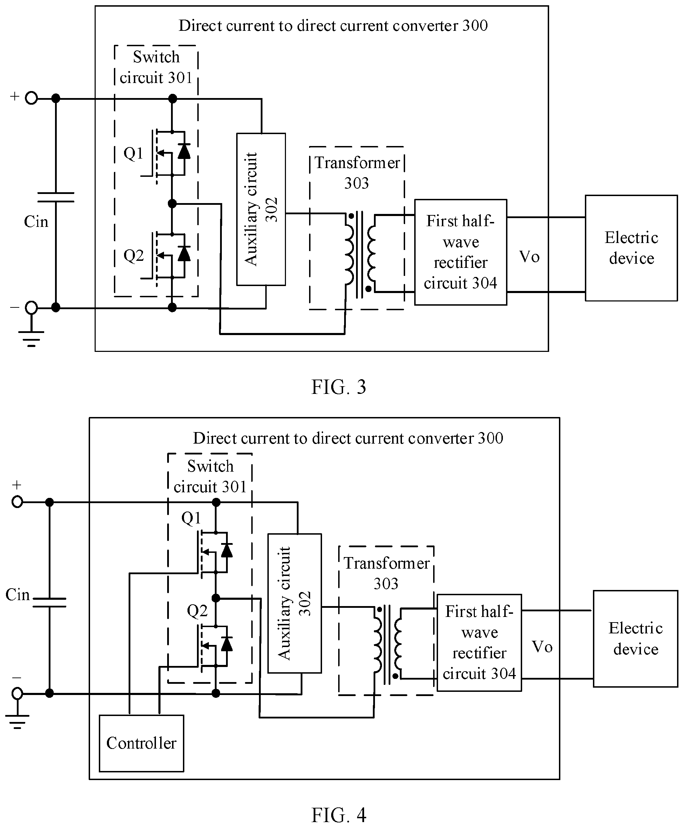

As shown in FIG. 3, a direct current to direct current converter 300 provided in an embodiment of this application includes a switch circuit 301 that is configured to switch a conduction path of the direct current to direct current conversion circuit 300, and the direct current to direct current converter 300 may further include an auxiliary circuit 302, a transformer 303, and a first half-wave rectifier circuit 304. The switch circuit 301 includes a first switching device and a second switching device that are connected in series. The switch circuit 301 may be configured to receive a first direct current. The transformer 303 includes a primary-side winding and a secondary-side winding.

Specifically, the auxiliary circuit 302 includes three ports. A first port of the auxiliary circuit 302 is connected to a high potential point of the switch circuit 301, a second port of the auxiliary circuit 302 is connected to a low potential point of the switch circuit 301, and a third port of the auxiliary circuit 302 is connected to a first terminal of the primary-side winding. A second terminal of the primary-side winding is connected to an intermediate node of the switch circuit 301. The secondary-side winding is connected to the first half-wave rectifier circuit 304.

For example, as shown in FIG. 3, the switch circuit 301 is connected to an external power supply. The external power supply may output the first direct current. If the first switching device Q1 and the second switching device Q2 in the switch circuit 301 are connected in series, a first electrode of the first switching device Q1 is connected to a positive terminal of the external power supply, and a second electrode of the second switching device Q2 is connected to a negative terminal of the external power supply. Therefore, the first electrode of the first switching device Q1 is the high potential point of the switch circuit 301, and the second electrode of the second switching device Q2 is the low potential point of the switch circuit 302. In this case, the first port of the auxiliary circuit 302 is connected to the first electrode of the first switching device Q1, the second port of the auxiliary circuit 302 is connected to the second electrode of the second switching device Q2, and the third port of the auxiliary circuit 302 is connected to the first terminal of the primary-side winding of the transformer 303.

Description is provided below by using an example in which the first electrode of the first switching device Q1 is the high potential point of the switch circuit 301, and the second electrode of the second switching device Q2 is the low potential point of the switch circuit 301.

When the direct current to direct current converter 300 provided in this embodiment of this application is used to perform voltage conversion on the received first direct current, if the switch circuit 301 is in a first state, the transformer 303 stores first electric energy transmitted by the auxiliary circuit 302. When the switch circuit 301 is in a second state, the transformer 303 receives second electric energy transmitted by the auxiliary circuit 302, and transmits the stored first electric energy and the received second electric energy to the first half-wave rectifier circuit 304. The first half-wave rectifier circuit 304 receives the electric energy transmitted by the transformer, and supplies power to a connected electric device. When the switch circuit 301 is in the first state, the first switching device Q1 is open, and the second switching device Q2 is closed. When the switch circuit 301 is in the second state, the first switching device Q1 is closed, and the second switching device Q2 is open.

In actual use, to reduce fluctuation of the received first direct current, a filter capacitor Cin is connected between the external power supply that is configured to output the first direct current and the direct current to direct current converter 300, and is configured to eliminate a ripple in the first direct current.

It should be understood that when the direct current to direct current converter 300 provided in this embodiment of this application performs voltage conversion, the electric energy transmitted by the transformer 303 to the first half-wave rectifier circuit 304 includes two parts: the first electric energy stored in the transformer 303 when the switch circuit 301 is in the first state and the second electric energy that is transmitted by the auxiliary circuit 302 and that is received by the transformer 303 when the switch circuit 301 is in the second state. If duration, in a voltage conversion period of the direct current to direct current converter, in which the switch circuit 301 is in the first state is increased, more electric energy is transmitted by the transformer to the secondary-side winding, and the secondary-side winding generates a larger voltage value. Therefore, the duration in which the switch circuit 301 is in the first state may be adjusted, to adjust a voltage value of a second direct current output by the direct current to direct current converter 300 and change a voltage conversion range of the direct current to direct current converter 300, so as to meet a voltage requirement of the electric device connected to a back end. Duration in which the switch circuit 301 is in the first state and the second state forms the voltage conversion period of the direct current to direct current converter.

It should be understood that when the first switching device Q1 is closed and the second switching device Q2 is open, a voltage borne by both terminals of the second switching device Q2 is a sum of a closing voltage of the first switching device Q1 and a voltage output by the external power supply that is connected to the direct current to direct current converter. The closing voltage of the first switching device Q1 is approximately equal to 0, and therefore a value of a reverse voltage borne when the second switching device Q2 is open may be effectively reduced. The direct current to direct current converter 300 may use a switching device with a relatively low withstand voltage level, to further improve efficiency of the direct current to direct current converter 300.

In actual use, the direct current to direct current converter 300 may be fastened to an electronic device. In another implementation, the direct current to direct current converter 300 may be disposed in a flexible and detachable form. That is, an electronic device is provided with a fixed interface, to implement a connection between the direct current to direct current converter 300 and the electric device. In this case, the direct current to direct current converter 300 may be considered as an apparatus that is independent of the electronic device.

In specific implementation, the switch circuit 301 includes the first switching device and the second switching device that are connected in series. A status of the switch circuit 301 may be implemented by controlling a working status of the first switching device and a working status of the second switching device. The working status includes an open state and a closed state.

In this application, the working status of the first switching device and the working status of the second switching device may be adjusted by using a controller. That is, the direct current to direct current converter 300 may further include the controller, and the controller may be configured to control the switch circuit 301 to be in the first state or the second state.

In specific implementation, as shown in FIG. 4, the controller may be connected to a control electrode of the first switching device and a control electrode of the second switching device in the switch circuit 301. The controller sends a drive signal to the control electrode of the first switching device and the control electrode of the second switching device, to control the working status of the first switching device and the working status of the second switching device, so as to control the switch circuit 301 to be in the first state or the second state.

In actual use, the controller may be any one of a micro controller unit (micro controller unit, MCU), a central processing unit (central processing unit, CPU), and a digital signal processor (digital signal processor, DSP). Certainly, a specific form of the controller is not limited to the foregoing examples.

The auxiliary circuit 302, the transformer 303, and the first half-wave rectifier circuit 304 in the direct current to direct current converter 300 are further described below by using examples.

### Auxiliary circuit

In this embodiment of this application, the auxiliary circuit 302 may include three ports that are respectively connected to the switch circuit 301 and the primary-side winding of the transformer, is configured to form an electric energy transmission path of the transformer with the switch circuit 301, and may transmit the received first direct current to the transformer 303.

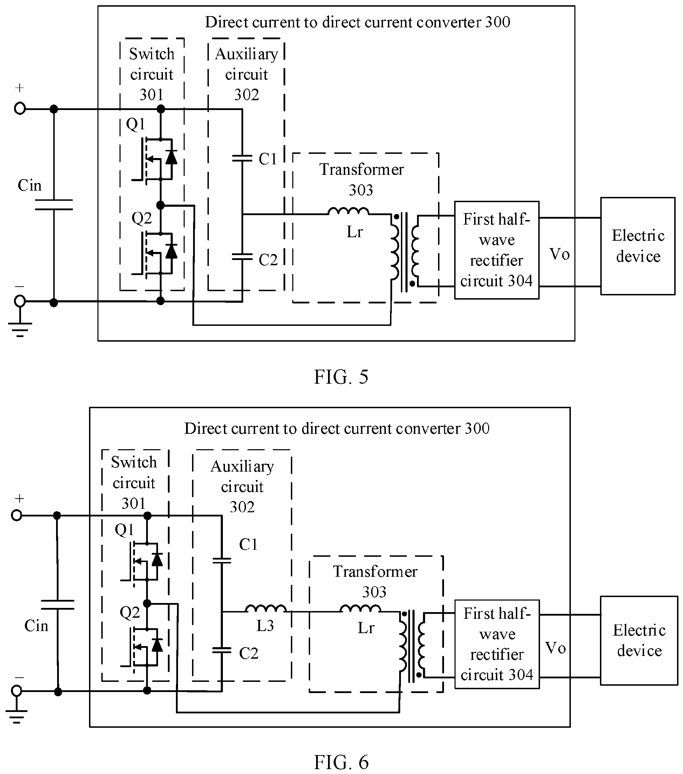

In specific implementation, as shown in FIG. 5, the auxiliary circuit 302 may include a first capacitor C1 and a second capacitor C2. A first terminal of the first capacitor C1 is connected to the first electrode of the first switching device Q1, and a second terminal of the first capacitor C1 is separately connected to a first terminal of the second capacitor C2 and the first terminal of the primary-side winding. A second terminal of the second capacitor C2 is connected to the second electrode of the second switching device Q2.

It should be understood that there is a leakage inductor Lr in the transformer 303. When a structure of the auxiliary circuit 302 shown in FIG. 5 is used to transmit electric energy to the primary-side winding of the transformer, the leakage inductor Lr, the first capacitor C1, the second capacitor C2, and the primary-side winding form a resonant cavity of the direct current to direct current converter 300. The resonant cavity is a cavity in which a high-frequency electromagnetic field continuously oscillates.

In an example, when capacitance of a single capacitor does not meet a requirement of the resonant cavity for capacitance, the auxiliary circuit 302 may include a plurality of third capacitors and a plurality of fourth capacitors. The plurality of third capacitors are sequentially connected in series to form a first branch circuit, and the plurality of fourth capacitors are sequentially connected in series to form a second branch circuit. A first terminal of the first branch circuit is connected to the high potential point of the switch circuit 301, and a second terminal of the first branch circuit is separately connected to a first terminal of the second branch circuit and the first terminal of the primary-side winding. A second terminal of the second branch circuit is connected to the low potential point of the switch circuit 301.

It should be understood that when the foregoing structure of the auxiliary circuit 302 is used to transmit electric energy, the leakage inductor Lr, the plurality of third capacitors, the plurality of fourth capacitors, and the primary-side winding form a resonant cavity of the direct current to direct current converter 300.

In another example, the auxiliary circuit 302 may include a plurality of fifth capacitors and a plurality of sixth capacitors. The plurality of fifth capacitors are connected in parallel to form a third branch circuit, and the plurality of sixth capacitors are connected in parallel to form a fourth branch circuit. A first terminal of the third branch circuit is connected to the high potential point of the switch circuit, and a second terminal of the third branch circuit is separately connected to a first terminal of the fourth branch circuit and the first terminal of the primary-side winding. A second terminal of the fourth branch circuit is connected to the low potential point of the switch circuit.

It should be understood that when the foregoing structure of the auxiliary circuit 302 is used to transmit electric energy, the leakage inductor Lr, the plurality of fifth capacitors, the plurality of sixth capacitors, and the primary-side winding form a resonant cavity of the direct current to direct current converter 300.

In an example, as shown in FIG. 6, when inductive reactance of the leakage inductor Lr does not meet a requirement of the resonant cavity for an inductor, the auxiliary circuit 302 may further include a third inductor L3 that is connected between the second terminal of the first capacitor C1 and the first terminal of the primary-side winding. In this case, the leakage inductor Lr, the first capacitor C1, the second capacitor C2, the first inductor L3, and the primary-side winding form a resonant cavity of the direct current to direct current converter 300.

A process in which the auxiliary circuit 302 provided in this embodiment of this application transmits electric energy to the primary-side winding of the transformer 303 is described below by using the structure of the auxiliary circuit shown in FIG. 5 as an example.

When the switch circuit 301 is in the first state, the first switching device Q1 is open, the second switching device Q2 is closed, and the first capacitor C1, the primary-side winding, and the second switching device Q2 form a transmission path of the external power supply. The external power supply transmits output electric energy to the primary-side winding through the path. When the second switching device Q2 is open and the first switching device Q1 is closed, the first switching device Q1, the primary-side winding, and the second capacitor form a conduction path of the external power supply, and the external power supply transmits output electric energy to the primary-side winding through the path.

### Transformer

The transformer 303 includes a primary side and a secondary side. The primary side of the transformer includes the primary-side winding, and the secondary side of the transformer includes the secondary-side winding. One terminal of the primary-side winding of the transformer 303 is connected to the third port of the auxiliary circuit 302, and the other terminal of the primary-side winding is connected to the intermediate node of the switch circuit 301. The secondary-side winding is connected to the first half-wave rectifier circuit 304. In specific implementation, the transformer 303 may transmit, to the first half-wave rectifier circuit 304, the electric energy transmitted by the auxiliary circuit 302. A quantity of turns per coil of the primary-side winding and the secondary-side winding may be set based on a requirement. This is not specifically limited herein in this application.

In actual use, the transformer may store the first electric energy transmitted by the auxiliary circuit 302, receive the second electric energy transmitted by the auxiliary circuit 302, and transmit the received second electric energy and the stored first electric energy to the first half-wave rectifier circuit 304. The first half-wave rectifier circuit 304 supplies power to the electric device by using the electric energy transmitted by the transformer 303.

It may be understood that power of the first electric energy and power of the second electric energy may be the same or different

The duration in which the switch circuit 301 is in the first state and the second state forms the voltage conversion period of the direct current to direct current converter 300. In the voltage conversion period, a working process of the transformer 303 mainly includes an energy storage phase and an energy release phase. Details are as follows:

### 1. Energy storage phase

The switch circuit 301 is in the first state, the first switching device Q1 is open, the second switching device Q2 is closed, and the transformer 303 is in the energy storage phase. In this case, the second switching device Q2, the auxiliary circuit 302, and the transformer 303 form a path for receiving the first direct current. The auxiliary circuit 302 converts the first direct current into first electric energy, and then transmits the first electric energy to the transformer. The transformer stores the first electric energy. In addition, for the transformer, to suppress a sudden change of a current, a corresponding excitation voltage is generated on the secondary-side winding of the transformer. In this case, the excitation voltage on the secondary-side winding enables the first half-wave rectifier circuit 304 to be open, and therefore the secondary-side winding can be prevented from releasing electric energy to the first half-wave rectifier circuit 304, and the transformer 303 may store energy continuously.

### 2. Energy release phase

The switch circuit 301 is in the second state, the first switching device Q1 is closed, the second switching device Q2 is open, and the transformer 303 is in the release phase. In this case, the first switching device Q1, the auxiliary circuit 302, and the transformer 303 form a path for receiving the first direct current. The auxiliary circuit converts the first direct current into second electric energy, and then transmits the second electric energy to the transformer. In addition, for the transformer, to suppress a sudden change of a current, a corresponding excitation voltage is generated on the primary-side winding and the secondary-side winding of the transformer. In this case, the excitation voltage on the secondary-side winding may enable the first half-wave rectifier circuit 304 to be closed. Therefore, the transformer may release the stored first electric energy and the received second electric energy by using the secondary-side winding.

A specific structure of the transformer 303 is further described below by using an example.

In this embodiment of this application, the first terminal of the primary-side winding of the transformer 303 is connected to the third port of the auxiliary circuit 302, the second terminal of the primary-side winding is connected to the intermediate node of the switch circuit 301, and the secondary-side winding of the transformer is connected to the first half-wave rectifier circuit 304.

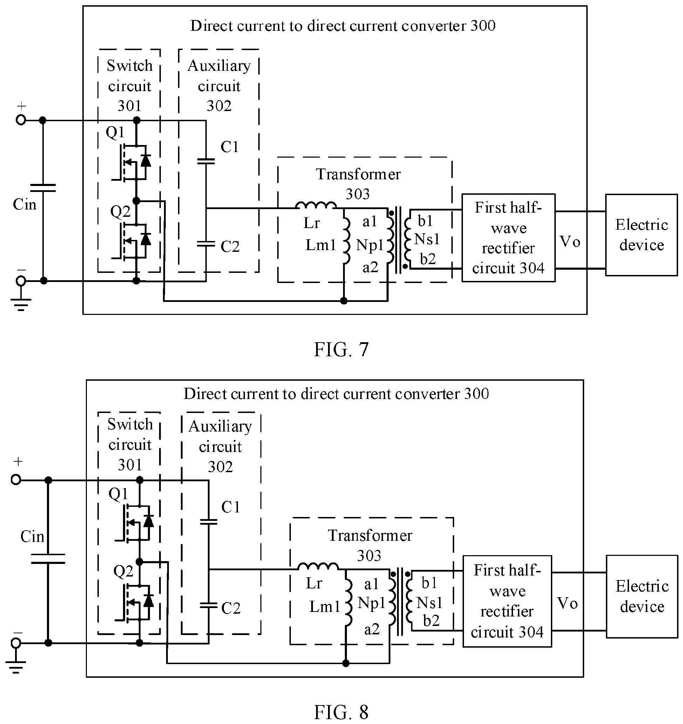

For example, as shown in FIG. 7, the primary-side winding of the transformer 303 may include an input winding Np1, and the secondary-side winding includes an output winding Ns1. A first terminal (a1) of the input winding Np1 is connected to the third port of the auxiliary circuit 302, and a second terminal (a2) of the input winding Np1 is connected to the intermediate node of the switch circuit 301. A first terminal (b1) of the output winding Ns1 is connected to a first input terminal of the first half-wave rectifier circuit 304, and a second terminal (b2) of the output winding Ns1 is connected to a second input terminal of the first half-wave rectifier circuit 304. The output winding Ns1 may receive electric energy transmitted by the input winding Np1, and transmit the received electric energy to the first half-wave rectifier circuit 304.

In actual use, the transformer 303 further includes a first inductor and a second inductor. The first inductor is an excitation inductor Lm1 of the transformer, and the second inductor is the leakage inductor Lr of the transformer 303. The excitation inductor Lm1 may be connected to the primary side of the transformer 303 or the secondary side of the transformer 303. In the following embodiments of this application, description is provided by using an example in which the excitation inductor Lm1 is connected to the primary side of the transformer 303.

Specifically, a first terminal of the excitation inductor Lm1 is connected to the first terminal a1 of the input winding Np1, and a second terminal of the excitation inductor Lm1 is connected to the second terminal a2 of the input winding Np1. A first terminal of the leakage inductor Lr is connected to the third port of the auxiliary circuit, and a second terminal of the leakage inductor Lr is connected to the first terminal a1 of the input winding Np1.

When the transformer 303 is used to transmit, to the first half-wave rectifier circuit 304, the first electric energy and the second electric energy that are transmitted by the auxiliary circuit 302, if the auxiliary circuit 302 transmits the first electric energy, the excitation inductor Lm1 receives and stores the first electric energy. When the auxiliary circuit 302 transmits the second electric energy, the input winding Np1 receives the second electric energy. The input winding Np1 transmits the received second electric energy to the output winding Ns1 of the transformer. In addition, the excitation inductor Lm1 transmits the stored first electric energy to the output winding Ns1 of the transformer 303, and the output winding Ns1 outputs the received electric energy to the first half-wave rectifier circuit 304, to supply power to an electric device that is connected to the first half-wave rectifier circuit 304.

In actual use, the transformer may store, when the switch circuit is in the second state, the second electric energy transmitted by the auxiliary circuit, and receive, when the switch circuit is in the first state, the first electric energy transmitted by the auxiliary circuit. In this case, this may be implemented by changing a position of a dotted terminal of the output winding Ns1, as shown in FIG. 8.

In a possible implementation, if the direct current to direct current converter 300 is applied to a high-power power supply scenario, to avoid a case in which the connected first half-wave rectifier circuit 304 is damaged due to an excessively high current output by the output winding Ns1, the secondary-side winding may further include an output winding Ns2. That is, each of the output winding Ns1 and the output winding Ns2 receives a part of electric energy transmitted by the input winding Np1 and the excitation inductor Lm1, to effectively implement shunting, so as to ensure safe operation of the first half-wave rectifier circuit 304.

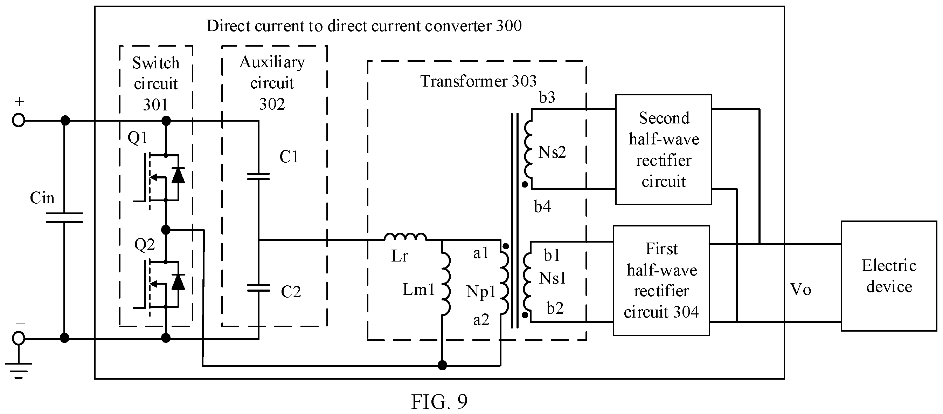

In specific implementation, the direct current to direct current converter 300 further includes at least one second half-wave rectifier circuit. As shown in FIG. 9, a first input terminal of the second half-wave rectifier circuit is connected to a first terminal (b3) of the output winding Ns2, and a second input terminal of the second half-wave rectifier circuit is connected to a first terminal (b4) of the output winding Ns2.

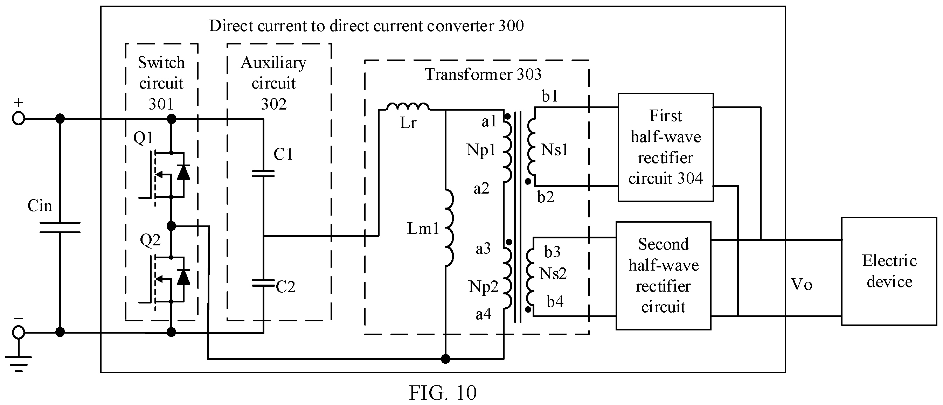

In a possible implementation, to implement that values of currents output by the output winding Ns1 and the output winding Ns2 are the same, as shown in FIG. 10, the transformer may further include an input winding Np2. The first terminal a1 of the input winding Np1 is connected to the third port of the auxiliary circuit 302, the second terminal a2 of the input winding Np1 is connected to a first terminal (a3) of the input winding Np2, and a second terminal (a4) of the input winding Np2 is connected to the intermediate node of the switch circuit 301. In actual use, the input winding Np1 transmits electric energy to the output winding Ns1, and the input winding Np2 transmits electric energy to the output winding Ns2.

In an example, to reduce a size of the transformer 303, the input winding Np1 and the input winding Np2 may share an iron core.

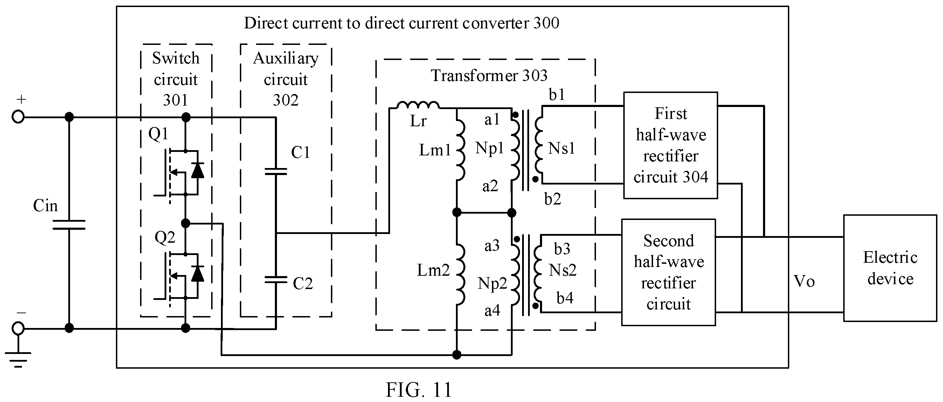

In another example, if the input winding Np1 and the input winding Np2 share an iron core, the iron core is of a relatively large size. To facilitate mounting and use of a device, as shown in FIG. 11, each of the input winding Np1 and the input winding Np2 may use an iron core to transmit electric energy. In this case, the transformer further includes an excitation inductor Lm2. The excitation inductor Lm1 is connected in parallel to the input winding Np1, and the excitation inductor Lm2 is connected in parallel to the input winding Np2.

It should be noted that the structure of the transformer 303 shown in FIG. 7 to FIG. 11 is merely an example. As research on the transformer 303 progresses, the structure of the transformer may change to some extent, and these structures should also be included in this embodiment of this application.

### First half-wave rectifier circuit

The first half-wave rectifier circuit 304 includes the first input terminal, the second input terminal, a first output terminal, and a second output terminal. The first input terminal of the first half-wave rectifier circuit 304 is connected to a first terminal of the secondary-side winding, and the second input terminal of the first half-wave rectifier circuit is connected to a second terminal of the secondary-side winding. The first output terminal and the second output terminal of the first half-wave rectifier circuit 304 are connected to two power supply ports of the electric device. Therefore, the first half-wave rectifier circuit 304 may convert electric energy output by the secondary-side winding into a supply voltage of the electric device, and then supply power to the electric device.

It should be understood that a half-wave rectifier circuit is connected to the secondary-side winding, and therefore the first half-wave rectifier circuit 304 further has a unilateral conduction characteristic. The first half-wave rectifier circuit 304 may convert electric energy that is output by the secondary-side winding and that is in a fixed direction, and output the supply voltage of the electric device.

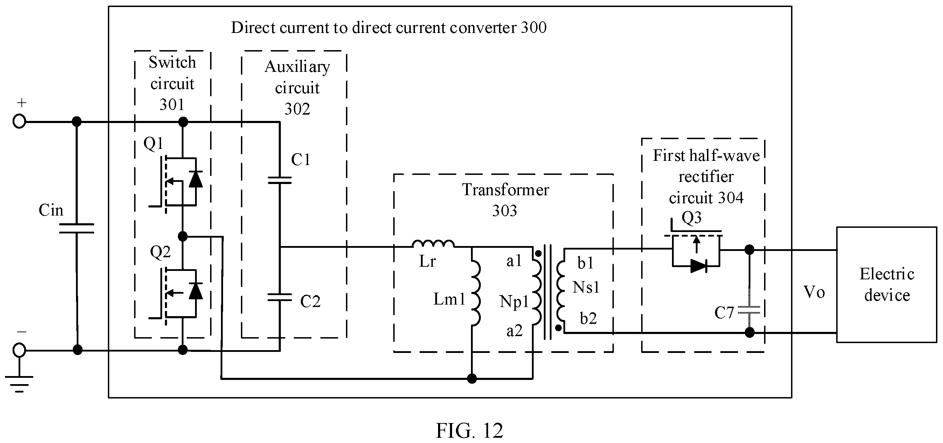

For a specific structure of the first half-wave rectifier circuit 304 in this embodiment of this application, refer to a structure of a current conventional half-wave rectifier circuit. For example, as shown in FIG. 12, the first half-wave rectifier circuit 304 mainly includes a third switching device Q3 and a seventh capacitor C7. A first terminal of the third switching device Q3 is connected to the first terminal of the secondary-side winding, and a second terminal of the third switching device Q3 is connected to a first terminal of the seventh capacitor C7. A second terminal of the seventh capacitor C7 is connected to the second terminal of the secondary-side winding.

In actual use, the first half-wave rectifier circuit 304 can convert only the electric energy that is output by the secondary-side winding and that is in the fixed direction. Therefore, the third switching device Q3 may be replaced with a diode with unidirectional conductivity, so that no drive signal needs to be configured for the third switching device Q3, to reduce working complexity of the first half-wave rectifier circuit 304.

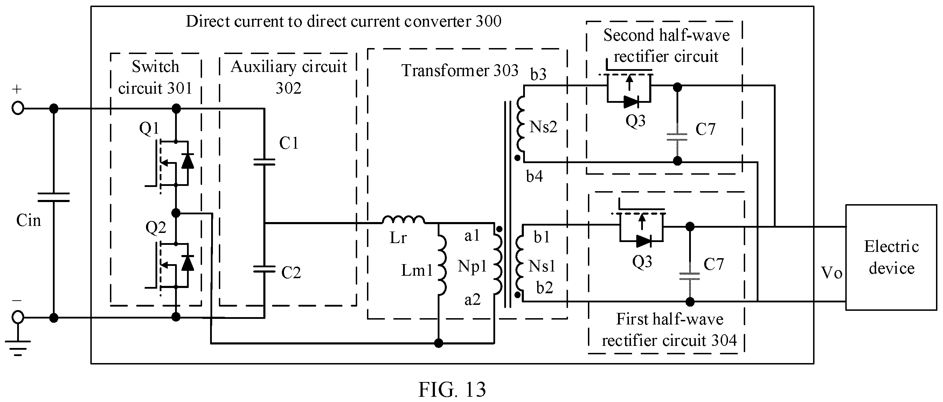

In a possible implementation, in addition to the output winding Ns1, the secondary-side winding of the transformer 303 further includes a plurality of output windings. As shown in FIG. 13, the direct current to direct current converter 300 provided in this embodiment of this application may further include at least one second half-wave rectifier circuit corresponding to the plurality of output windings. Two input terminals of the second half-wave rectifier circuit are connected to two terminals of a corresponding output winding, and two output terminals of the second half-wave rectifier circuit are connected to the two power supply ports of the electric device. In other words, the output terminal of the first half-wave rectifier circuit is connected in parallel to the output terminal of the second half-wave rectifier circuit. Therefore, when the first half-wave rectifier circuit and the second half-wave rectifier circuit output a same voltage, a current transmitted by the transformer may be shunted, to increase a supply current of the electric device, so as to increase power supply power.

In specific use, both the output terminal of the first half-wave rectifier circuit 302 and the output terminal of the second half-wave rectifier circuit are connected to the electric device, and are configured to supply power to the electric device. Therefore, a circuit structure of the second half-wave rectifier circuit may be the same as a circuit structure of the first half-wave rectifier circuit 304.

It should be noted that the direct current to direct current converter 300 provided in this embodiment of this application may be applied to any power module. The power module may be a module into which a direct current to direct current converter is integrated, for example, a power module. The power module may be a direct current to direct current power module or an alternating current to direct current power module. The direct current to direct current converter 300 may be all or a part of a conversion circuit in the power module. This is not limited in this embodiment of this application. The power module provided in this embodiment of this application may be applied to a plurality of types of electronic devices such as an electric vehicle, a data center, and a substation.

FIG. 12 is an example schematic diagram of a direct current to direct current converter according to an embodiment of this application. As shown in FIG. 12, the direct current to direct current converter mainly includes a switch circuit, an auxiliary circuit, a transformer, a first half-wave rectifier circuit, and a controller (not shown).

The switch circuit mainly includes a first switching device Q1 and a second switching device Q2. A first electrode of the first switching device Q1 is configured to receive a positive terminal of an external power supply, a second electrode of the first switching device Q1 is connected to a first electrode of the second switching device Q2, and a second electrode of the second switching device Q2 is connected to a negative terminal of the external power supply.

The auxiliary circuit mainly includes a first capacitor C1 and a second capacitor C2. A first terminal of the first capacitor C1 is connected to the first electrode of the first switching device Q1, and a second terminal of the first capacitor C1 is connected to a first terminal of the second capacitor C2 and a first terminal of a primary-side winding of the transformer. A second terminal of the second capacitor C2 is connected to the first electrode of the second switching device Q2.

The transformer includes an excitation inductor Lm1, an input winding Np1, a leakage inductor Lr, and an output winding Ns1. A first terminal of the leakage inductor Lr is connected to the second terminal of the first capacitor C1, and a second terminal of the leakage inductor Lr is connected to a first terminal of the excitation inductor Lm1. The first terminal of the excitation inductor Lm1 is connected to a first terminal of the input winding Np1, and a second terminal of the excitation inductor Lm1 is connected to a second terminal of the input winding Np1 and the second electrode of the first switching device Q1. A first terminal and a second terminal of the output winding Ns1 are connected to two input terminals of the first half-wave rectifier circuit.

The first half-wave rectifier circuit includes a third switching device Q3 and a seventh capacitor C7. A first electrode of the third switching device Q3 is connected to the first terminal b1 of the input winding Ns1, and a second electrode of the third switching device Q3 is connected to a first terminal of the seventh capacitor C7. A second terminal of the seventh capacitor C7 is connected to the second terminal b2 of the input winding Ns1.

The controller is connected to a control electrode of the first switching device Q1 and a control electrode of the second switching device Q2.

The controller may send a drive signal to the first switching device Q1 and the second switching device Q2, to control the transformer to perform charging or discharging.

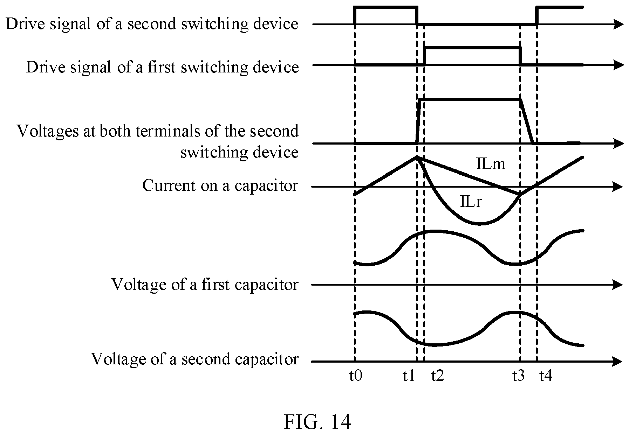

A working process of the direct current to direct current converter is described below with reference to a schematic diagram of a drive signal shown in FIG. 14.

A drive signal of the first switching device Q1 is used to control the first switching device Q1 to be closed or open, and a drive signal of the second switching device Q2 is used to control the second switching device Q2 to be closed or open. As shown in FIG. 14, a period length of the drive signal of the first switching device Q1 and the drive signal of the second switching device Q2 is T (t0-t4).

It may be understood that in an ideal case, the drive signal of the first switching device Q1 and the drive signal of the second switching device Q2 are complementary. As shown in FIG. 14, in consideration of a factor such as a switching delay of the switching device, there may be a specific delay between a falling edge in the drive signal of the first switching device Q1 and a rising edge in the drive signal of the second switching device Q2.

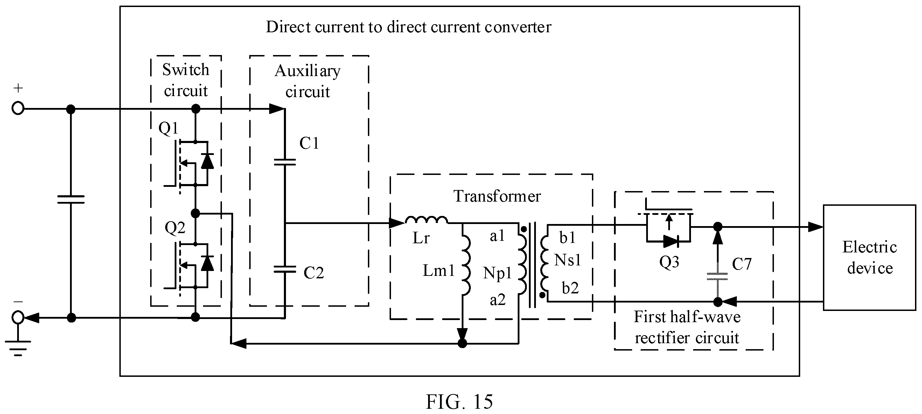

In a time period from t0 to t1, the first switching device Q1 is open, and the second switching device Q2 is closed. In this case, an electric energy transmission direction is shown by an arrow in FIG. 15. In the time period from t0 to t1, a current is input from a high potential point of the external power supply, and sequentially flows through the first capacitor C1, the leakage inductor Lr, the excitation inductor Lm1, and the second switching device Q2. In this case, an excitation voltage for which a1 is a positive electrode and a2 is a negative electrode is generated on the excitation inductor Lm1. Due to the excitation voltage, an excitation voltage for which b1 is a negative electrode and b2 is a positive electrode is generated on the output winding. Due to the excitation voltage, the third switching device Q3 bears a reverse voltage and is closed, and the output winding cannot form an electric energy transmission path. Therefore, the transformer directly stores electric energy that is transmitted by the auxiliary circuit and that is output by the external power supply. In this case, electric energy stored on C7 supplies power to an electric device. It should be understood that an electric energy transmission path of the external power supply passes through the first capacitor C1, and therefore the external power supply may charge the first capacitor C1 on the electric energy transmission path.

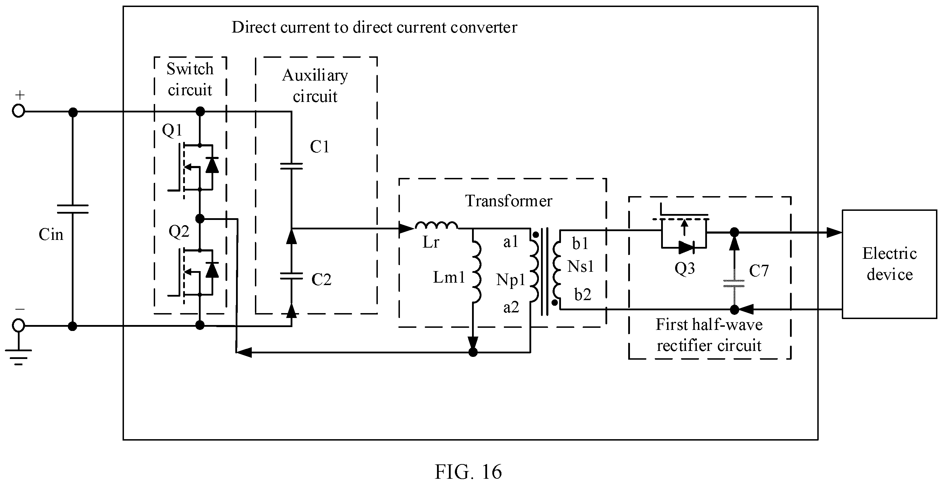

In addition, the second capacitor C2 releases electric energy. In this case, an electric energy transmission direction of the second capacitor C2 is shown by an arrow in FIG. 16. In the time period from t0 to t1, a current is input from the first terminal of the second capacitor C2, sequentially flows through the leakage inductor Lr, the excitation inductor Lm1, and the second switching device Q2, and then flows back to the second terminal of the second capacitor C2. In this case, an excitation voltage for which a1 is a positive electrode and a2 is a negative electrode is generated on the excitation inductor Lm1. Due to the excitation voltage, an excitation voltage for which b1 is a negative electrode and b2 is a positive electrode is generated on the output winding. Due to the excitation voltage, the third switching device Q3 bears a reverse voltage and is closed, and the output winding cannot form an electric energy transmission path. Therefore, the transformer directly stores electric energy output by the second capacitor C2. The electric energy output by the second capacitor C2 and the electric energy output by the external power supply form first electric energy.

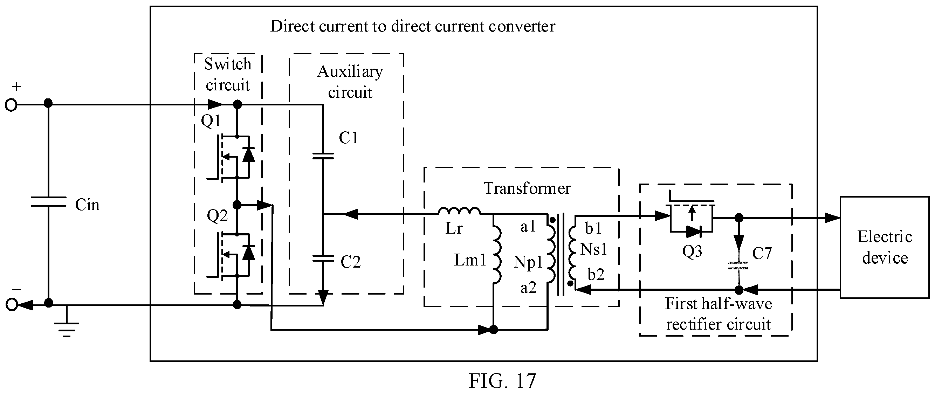

In a time period from t2 to t3, the first switching device Q1 is closed, and the second switching device Q2 is open. In this case, an electric energy transmission direction is shown by an arrow in FIG. 17. In the time period from t2 to t3, a current is input from the high potential point of the external power supply, and sequentially flows through the first switching device Q1, the excitation inductor Lm1, the input winding Np1, the leakage inductor Lr, and the second capacitor C2. In this case, for the excitation inductor Lm1 and the input winding Np1, to suppress a change of the current, an excitation voltage for which a1 is a negative electrode and a2 is a positive electrode is generated on the excitation inductor Lm 1 and the input winding Np 1. Due to the excitation voltage, there is a difference between a value ILm of a current flowing through the excitation winding Lm1 and a value ILr of a current flowing through a first inductor Lr. The first electric energy stored by the excitation inductor Lm1 in the time period from t0 to t1 and second electric energy received by the input winding Np1 in the time period from t2 to t3 are transmitted to the output winding Ns1. An excitation voltage for which b1 is a positive electrode and b2 is a negative electrode is generated on the output winding Ns1. Due to the excitation voltage, the third switching device Q3 bears a forward voltage and is closed. Therefore, the output winding Ns1 charges each of the electric device and the seventh capacitor C7.

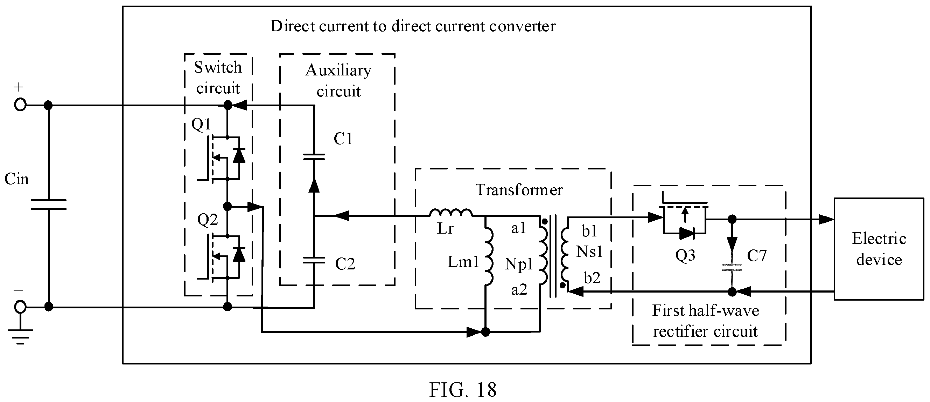

In addition, the first capacitor C1 releases electric energy that is stored in the time period from t0 to t1. In this case, an electric energy transmission direction of the first capacitor C1 is shown by an arrow in FIG. 18. In the time period from t2 to t3, a current is input from the first terminal of the first capacitor C1, sequentially flows through the first switching device Q1, the excitation inductor Lm1, the input winding Np1, and the leakage inductor Lr, and then flows back to the second terminal of the first capacitor C1. In this case, an excitation voltage for which a1 is a negative electrode and a2 is a positive electrode is generated on the excitation inductor Lm1 and the input winding Np1. Due to the excitation voltage, an excitation voltage for which b1 is a positive electrode and b2 is a negative electrode is generated on the output winding Ns1. Due to the excitation voltage, the third switching device Q3 bears a forward voltage and is closed, and the output winding Ns1 forms an electric energy transmission path. Therefore, the output winding Ns1 charges each of the electric device and the seventh capacitor C7. The electric energy transmitted by the external power supply and the electric energy output by the first capacitor C1 form the second electric energy.

It may be learned that the controller controls the first switching device Q1 and the second switching device Q2 to be open and closed alternately, so that a voltage direction on the excitation inductor Lm1 or the input winding Np1 changes alternately, and the excitation inductor Lm1 or the input winding Np1 can convert received electric energy into electric energy in a form of an alternating current, and transmit the electric energy to the secondary-side winding by using an iron core of the transformer.

In actual use, electric energy released by the transformer mainly includes two parts: the first electric energy stored by the excitation inductor Lm1 in the time period from t0 to t1 and the second electric energy received by the input winding Np1 in the time period from t2 to t3. A larger percentage of the time period from t0 to t1 in a voltage conversion period of the direct current to direct current converter indicates more electric energy stored by the excitation inductor Lm1 in the time period from t0 to t1 and a larger effective value of an output voltage generated when the excitation inductor Lm1 releases energy. Therefore, duration of closing the second switching device Q2 may be adjusted, to adjust a value of a voltage output to the electric device.

It should be understood that when the first switching device Q1 is closed and the second switching device Q2 is open, a voltage borne by both terminals of the second switching device Q2 is a sum of a closing voltage of the first switching device Q1 and a voltage output by an external voltage of the direct current to direct current converter. The closing voltage of the first switching device Q1 is approximately equal to 0, and therefore a reverse voltage borne when the second switching device Q2 is open may be effectively reduced. The direct current to direct current converter 300 may use a switching device with a relatively low withstand voltage level, to further improve efficiency of the direct current to direct current converter.

Certainly, the foregoing description of the structure of the direct current to direct current converter is merely an example. In actual application, based on different primary-side windings and secondary-side windings of the transformer, the direct current to direct current converter provided in this embodiment of this application further includes another structure. Working principles of the direct current to direct current converter are the same, and therefore are not described one by one herein in this application.

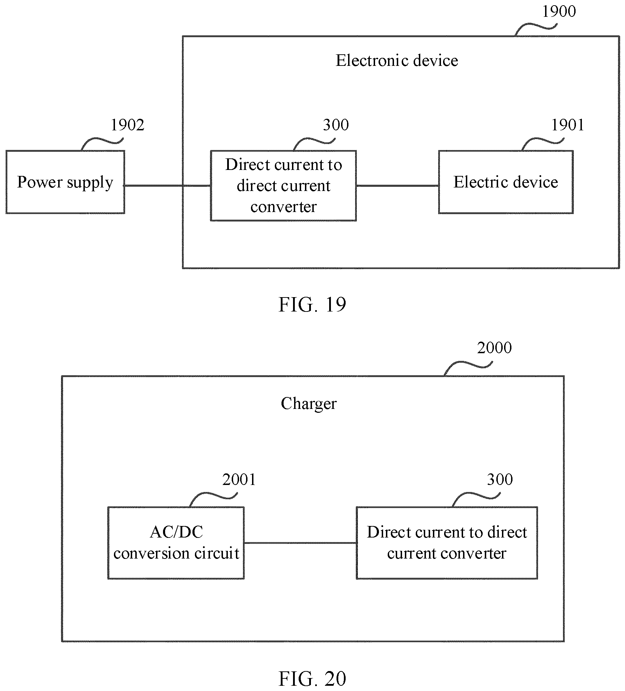

Based on a same technical concept, as shown in FIG. 19, an embodiment of this application further provides an electronic device 1900. The electronic device 1900 includes the direct current to direct current converter 300 provided in embodiments of this application and an electric device 1901.

In specific implementation, the direct current to direct current converter 300 is configured to: receive a first direct current output by an external power supply, convert the first direct current into a second direct current, and output the second direct current to the electric device 1901. A voltage value of the second direct current is an operating voltage value of the electric device 1901. The electric device 1901 is connected to the direct current to direct current converter 300, and the electric device 1901 is configured to receive the second direct current.

Optionally, the electronic device 1900 may further include a power supply 1902. The direct current to direct current converter 300 may convert a first direct current output by the power supply 1902 into a second direct current, to supply power to the electric device 1901. For example, the electronic device 1900 may be a new energy vehicle, a connected vehicle, or an intelligent vehicle.

Based on a same technical concept, as shown in FIG. 20, an embodiment of this application further provides a charger 2000. The charger 2000 may include the direct current to direct current converter 300 provided in embodiments of this application and an alternating current (alternating current, AC) to direct current (direct current, DC) conversion circuit (AC/DC conversion circuit) 2001.

The AC/DC conversion circuit 2001 is configured to: receive a first alternating current, and convert the first alternating current into a first direct current. The direct current to direct current converter 300 is connected to the AC/DC converter 2001, and the direct current to direct current converter 300 is configured to: receive the first direct current, and convert the first direct current into a second direct current.

For example, the charger may be a charger of a terminal device or an on-board charger (on-board charger, OBC).

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A direct current to direct current converter, comprising: a switch circuit, an auxiliary circuit, a transformer, and a first half-wave rectifier circuit, wherein the transformer comprises a primary-side winding and a secondary-side winding;
the switch circuit comprises a first switching device and a second switching device that are connected in series, and the switch circuit is configured to receive a first direct current;
a first port of the auxiliary circuit is connected to a high potential point of the switch circuit, a second port of the auxiliary circuit is connected to a low potential point of the switch circuit, and a third port of the auxiliary circuit is connected to a first terminal of the primary-side winding;
a second terminal of the primary-side winding is connected to an intermediate node of the switch circuit;
the secondary-side winding is connected to the first half-wave rectifier circuit; and
the transformer is configured to: when the switch circuit is in a first state, store first electric energy transmitted by the auxiliary circuit; and when the switch circuit is in a second state, receive second electric energy transmitted by the auxiliary circuit, and output the received second electric energy and the stored first electric energy to the first half-wave rectifier circuit.

2. The direct current to direct current converter according to claim 1, wherein the transformer comprises a first inductor and a second inductor;
the first inductor is connected in parallel to the primary-side winding;
a first terminal of the second inductor is connected to the third port of the auxiliary circuit, and a second terminal of the second inductor is connected to the first terminal of the primary-side winding;
the first inductor is configured to: when the switch circuit is in the first state, store the first electric energy transmitted by the auxiliary circuit; and when the switch circuit is in the second state, transmit the stored first electric energy to the secondary-side winding; and
the primary-side winding is configured to: when the switch circuit is in the second state, receive the second electric energy and transmit the second electric energy to the secondary-side winding by the primary-side winding.

3. The direct current to direct current converter according to claim 1 or 2, wherein the first state comprises: the first switching device is open and the second switching device is closed; and
the second state comprises: the first switching device is closed and the second switching device is open.

4. The direct current to direct current converter according to any one of claims 1 to 3, wherein the auxiliary circuit comprises a first capacitor and a second capacitor;
a first terminal of the first capacitor is connected to the high potential point of the switch circuit, and a second terminal of the first capacitor is separately connected to a first terminal of the second capacitor and the first terminal of the primary-side winding; and
a second terminal of the second capacitor is connected to the low potential point of the switch circuit.

5. The direct current to direct current converter according to claim 4, wherein the auxiliary circuit further comprises a third inductor that is connected between the second terminal of the first capacitor and the first terminal of the primary-side winding.

6. The direct current to direct current converter according to any one of claims 1 to 3, wherein the auxiliary circuit comprises a plurality of third capacitors and a plurality of fourth capacitors;
the plurality of third capacitors are sequentially connected in series to form a first branch circuit, and the plurality of fourth capacitors are sequentially connected in series to form a second branch circuit;
a first terminal of the first branch circuit is connected to the high potential point of the switch circuit, and a second terminal of the first branch circuit is separately connected to a first terminal of the second branch circuit and the first terminal of the primary-side winding; and
a second terminal of the second branch circuit is connected to the low potential point of the switch circuit.

7. The direct current to direct current converter according to any one of claims 1 to 3, wherein the auxiliary circuit comprises a plurality of fifth capacitors and a plurality of sixth capacitors;
the plurality of fifth capacitors are connected in parallel to form a third branch circuit, and the plurality of sixth capacitors are connected in parallel to form a fourth branch circuit;
a first terminal of the third branch circuit is connected to the high potential point of the switch circuit, and a second terminal of the third branch circuit is separately connected to a first terminal of the fourth branch circuit and the first terminal of the primary-side winding; and
a second terminal of the fourth branch circuit is connected to the low potential point of the switch circuit.

8. The direct current to direct current converter according to any one of claims 1 to 7, wherein the direct current to direct current converter further comprises at least one second half-wave rectifier circuit; and
an input terminal of each of the at least one second half-wave rectifier circuit is connected to the secondary-side winding, and an output terminal of each second half-wave rectifier circuit is connected in parallel to an output terminal of the first half-wave rectifier circuit.

9. The direct current to direct current converter according to claim 2, wherein the primary-side winding comprises a first input winding; and
a first terminal of the first input winding is connected to a first terminal of the first inductor, and a second terminal of the first input winding is connected to the intermediate node of the switch circuit and a second terminal of the first inductor.

10. The direct current to direct current converter according to claim 9, wherein the primary-side winding further comprises a second input winding that is connected between the second terminal of the first input winding and the intermediate node of the switch circuit.

11. The direct current to direct current converter according to any one of claims 1 to 10, wherein the first half-wave rectifier circuit comprises a third switching device and a seventh capacitor;
a first terminal of the third switching device is connected to a first terminal of the secondary-side winding, and a second terminal of the third switching device is connected to a first terminal of the seventh capacitor; and
a second terminal of the seventh capacitor is connected to a second terminal of the secondary-side winding.

12. The direct current to direct current converter according to any one of claims 1 to 11, wherein the direct current to direct current converter further comprises a controller; and
the controller is connected to the switch circuit, and the controller is configured to control the switch circuit to be in the first state or the second state.

13. The direct current to direct current converter according to claim 12, wherein the controller is further configured to adjust, based on a target turn ratio of the direct current to direct current converter, duration of maintaining the first state and the second state; wherein the target turn ratio is a ratio of a voltage value of the first direct current to a voltage value of a second direct current.

14. An electronic device, comprising an electric device and the direct current to direct current converter according to any one of claims 1 to 13, wherein
the direct current to direct current converter is configured to: receive a first direct current, and convert the first direct current into a second direct current, and a voltage value of the second direct current is an operating voltage value of the electric device; and
the electric device is connected to the direct current to direct current converter, and the electric device is configured to receive the second direct current.

15. A charger, comprising an alternating current to direct current AC/DC conversion circuit and the direct current to direct current converter according to any one of claims 1 to 13, wherein
the AC/DC conversion circuit is configured to: receive a first alternating current, and convert the first alternating current into a first direct current; and
the direct current to direct current converter is connected to the AC/DC converter, and the direct current to direct current converter is configured to: receive the first direct current, and convert the first direct current into a second direct current.
